# EUROPÄISCHE PATENTSCHRIFT

(11) **EP 2 677 011 B1**
(45) Veröffentlichungstag und Bekanntmachung des Hinweises auf die Patenterteilung: **25.10.2017**
(21) Anmeldenummer: 12173195.4
(22) Anmeldetag: 22.06.2012
(51) Int. Cl.: C09J 1/02, C09J 9/00, C09J 201/00, F24D 3/12, F24F 5/00

(54) **Wärmeleitende Klebe- und Gießmasse**
Heat conductive adhesive and cast compound
Masse de coulée et masse adhésive à conduction thermique

(43) Veröffentlichungstag der Anmeldung: 25.12.2013
(73) Patentinhaber: Zehnder Group International AG, 5722 Gränichen (CH); Kleiner, Wolfgang, 8266 Steckborn (CH); Götz, Thomas, 8266 Steckborn (CH)
(72) Erfinder: Kleiner, Wolfgang, 8266 Steckborn (CH); Götz, Thomas, 8266 Steckborn (CH)
(74) Vertreter: Rausch.Wanischeck.Brinkmann.Intellectual Property

(56) Entgegenhaltungen:
- EP-A1- 0 133 631
- EP-A1- 1 669 682
- EP-A2- 0 568 523
- WO-A1-92/10552
- CN-A- 101 957 148
- DE-A1-102007 004 953
- JP-A- 2010 111 714

## Beschreibung

Die Erfindung betrifft eine wärmeleitende Klebe- und Gießmasse zur Verbindung von metallischen Bauteilen.

Wärmeleitende Klebe- und Gießmassen sind im Stand der Technik bekannt. Sie werden insbesondere zur Herstellung von Wärmeleitplatten verwendet, das heißt um Verbindungen zwischen wärmeführenden Bauteilen wie Rohren, Blechen oder Rippen herzustellen. Dabei werden insbesondere wärmeleitende Massen eingesetzt, welche eine hohe Wärmeleitfähigkeit besitzen und gleichzeitig fließfähig und formbar sind, damit die zu verbindenden Bauelemente formschlüssig darin eingebettet werden können.

Es ist ein Verfahren bekannt, bei welchem ein vorgefertigtes Rohrregister in eine Form gelegt und diese mit einer wämeleitenden Klebe- und Gießmasse ausgefüllt wird. Bei der wärmeleitenden Klebe- und Gießmasse handelt es sich um eine Masse aus einem thermisch gut leitfähigen Material. Dieses enthält insbesondere Kohlenstoff, wobei auch Grafit, Schaumgrafit und dergleichen in Frage kommen. Das wärmeleitende Material kann entweder in einem gießfähigen Zustand vorliegen und in die Form gegossen werden, oder als loses Material in die Form geschüttet und verdichtet beziehungsweise eingestampft werden.

Weiterhin sind im Stand der Technik Verfahren bekannt, bei welchen Rohrregister in Platten aus thermisch leitfähigem Material eingepresst oder zwischen mehreren derartigen Platten verpresst werden. Derartige wärmeleitfähige Materialien sind beispielsweise Platten aus Grafitschaum.

Die Druckschrift DE 198 44 617 A1 offenbart beispielsweise eine Anordnung zur Klimatisierung von Räumen, welche aus Klimaplatten besteht, die einen Korpus aus mineralischem Material und ein darin eingebettetes mäanderförmig gebogenes Rohrregister aufweisen. Das mineralische Material besteht dabei aus einem Hydratgemisch verschiedener Hydratstufen sowie mineralogischen und/oder metallischen Zusätzen mit dichtem Gefüge. Das Hydratgemisch kann dabei unter anderem Kalziumsulfat, Kalziumcarbonat oder Magnesiumcarbonat enthalten. Die metallischen Zusätze können beispielsweise granulat- oder pulverförmiges Kupfer oder Kupferlegierungen sein. Das mäanderförmig gebogene Rohrregister wird in das Hydratgemisch eingepresst und kann somit mit den Rohrregistern benachbarter Klimaplatten fluidleitend gekoppelt werden. Die wärmeleitende Verbindung erfolgt dabei über formschlüssige Kontaktierung benachbarter Klimaplatten.

Die Druckschrift DE 20 2004 002 089 U1 zeigt ein Heizelement in Sandwichbauweise, bei welchem Heizrohre in eine wärmeleitende, mit verschiedenen Materialien gefüllte Kunststoffkompositschicht eingepresst sind. Die Kunststoffkompositschicht weist dabei einen mit wärmeleitendem Material gefüllten Polyurethan-Hartschaum auf, welcher wärmeleitende Partikel aus Ruß, Graphit, Aluminiumpulver, Aluminiumoxid, Eisen und/oder silikatische Partikel enhält. In diese wärmeleitende Kompositschicht wird das Rohrsystem formschlüssig eingebettet.

Nachteilig, insbesondere bei dem Einpressen von Rohrregistern in eine Platte, ist, dass der Wärmeübergang vom Rohrregister auf die Platte sehr schlecht ist. Wenn derartige Wärmetauscherelemente für Heiz- und/oder Kühlkörper eingesetzt werden, geht vergleichsweise viel Energie im Übergang von dem Rohrregister auf die Platte verloren.

Die im Stand der Technik bekannten Platten, bei welchen das Rohrregister in die wärmeleitende Klebe- und Gießmasse eingegossen wurde, haben sich dem gegenüber im Stand der Technik bewährt. Jedoch besteht auch hier der Wunsch, die Wärmeleitfähigkeit und gleichzeitig die Haftfestigkeit der Klebe- und Gießmasse an dem Rohrregister zu erhöhen.

Aus dem Stand der Technik ist gemäß der EP 1 669 682 A1 ferner eine Faserzusammensetzung bekannt geworden, die zellulosehaltige Fasern einerseits und mindestens einen Mischungspartner mit wärmeleitenden Eigenschaften andererseits aufweist. Die Faserzusammensetzung eignet sich zur Verwendung als Wärmeleitstoff, der in einem Wärmetauscherelement enthalten ist, das über eine integrierte Heiz- und/oder Kühlleitung verfügt.

Die EP 0 568 523 A2 offenbart eine Klimaplatte mit einer auf einer Trägerschicht angeordneten, von einem Kühl- oder Heizmedium durchströmbaren Leitung. Dabei sind die Leitungen in einer Schicht aus einem hydraulisch abbindenden Mörtel oder einem Bindemittel auf Kunstharzbasis, der beziehungsweise das mit Metallfasern aus gut wärmeleitenden Metallen, wie Stahl, Aluminium oder Kupfer vermischt ist, eingebettet.

Die EP 0 133 631 A1 offenbart ein Unterbodenwärme/Kühl-System. Dieses verfügt über Paneele, wobei ein jedes Paneel eine obere Schicht aufweist, die aus einer faserverstärkten Komponente gebildet ist, in die eine Substanz wie zum Beispiel Sand fein verteilt eingebracht ist, um die thermale Leitfähigkeit zu erhöhen.

Aus dem Stand der Technik ist gemäß der JP 2 008 282 884 A ferner eine wärmeleitende Emulsion für die Verwendung als thermisch leitfähige Beschichtung bekannt, in welche Emulsion thermisch leitfähige Partikel eingemischt sind.

Die WO 92/10552 A1 offenbart ein Bindemittel auf Basis wässriger Alkalimetallsilikatlösungen, die ein Molverhältnis SiO₂ zu M₂O im Bereich von 0,20 bis 4,1:1 aufweisen, wobei M Natrium, Kalium und /oder Lithium bedeutet.

Die CN 101957148 A beschreibt schließlich noch einen nicht metallischen Heizkörper, der über eine nicht metallische Rohrleitung verfügt. Diese nicht metallische Rohrleitung ist in ein nicht metallisches Material eingebettet, das über besonders gute Wärmeleitfähigkeiten verfügt.

Es ist daher Aufgabe der Erfindung, eine wärmeleitende Klebe- und Gießmasse zu schaffen, welche sowohl eine wärmeleitende als auch eine besonders haftfeste Verbindung zu benachbarten Oberflächen ermöglicht.

Zur Lösung dieser Aufgabe schlägt die Erfindung eine wärmeleitende Klebe- und Gießmasse nach den Merkmalen gemäß Anspruch 1 vor.

Durch die Zugabe eines Bindemittels zu dem wärmeleitende Substanzen aufweisenden Füllmaterial lässt sich eine besonders haftfeste und wärmeleitende Verbindung der Bauteile zu der Klebe- und Gießmasse erreichen. Das Bindemittel sorgt dabei für eine hohe Haftwirkung zwischen den benachbarten Oberflächen.

Die Erfindung sieht vor, dass das Bindemittel ein Alkalisilikat ist. Da die wärmeführenden Bauteile zumeist metallische Oberflächen aufweisen, bietet sich ein Bindemittel an, welches eine aktive chemische Verbindung zu diesen ausbildet. Dabei liegt der Erfindung die Erkenntnis zugrunde, dass metallische Oberflächen in der Regel Überzüge aus Metalloxiden aufweisen. Sofern das gewählte Alkalisilikat nun zu diesen Metalloxid-Überzügen eine chemische Verbindung eingeht, können die gewünschten starken Haftkräfte erreicht werden.

Ebenfalls kann die erfindungsgemäße Lösung auch für Kunststoffbauteile genutzt werden. Das Alkalisilikat wird dann so ausgewählt, dass es eine chemische Verbindung zu dem jeweiligen Kunststoff ausbildet.

Dadurch, dass die Klebe- und Gießmasse gleichzeitig das wärmeleitende Füllmaterial bereitstellt, kann durch die Verbindung von Füllmaterial und Bindemittel eine Gesamtmasse bereitgestellt werden, welche sowohl eine hohe Wärmeleitfähigkeit als auch eine hohe Haftkraft aufweist.

Wie durch die Erfindung vorgeschlagen kann das Bindemittel ein Alkalisilikat, insbesondere Na₂SiO₃ oder K₂SiO₃, sein. Die vorgeschlagenen Alkalisilikate sind dabei allgemein unter der Bezeichnung "Wassergläser" bekannt. Wassergläser weisen unterschiedliche Anteile und Arten von Alkalioxiden auf. Unterschieden werden dabei beispielsweise Natriumwassergläser und Kaliumwassergläser. Das mit Abstand am häufigsten eingesetzte Wasserglas ist das Natriumwasserglas, oder Natronwasserglas, welches die chemische Formel Na₂SiO₃ aufweist. Na₂SiO₃ ist eine wasserhelle, ölige Flüssigkeit, welche alkalisch reagiert. Bei Berührung mit Luft erstarrt diese Flüssigkeit allmählich zu einer harten, glasigen Masse. Kaliumwasserglas, chemische Formel K₂SiO₃, hat ganz ähnliche Eigenschaften wie Natronwasserglas. Wassergläser sind, wie der Name schon sagt, mit echtem Glas verwandt. Dementsprechend liegen auch die zu erwartenden Wärmeleitfähigkeiten des reinen Bindemittels Wasserglas bei etwa 1 W/mK.

Das als Bindemittel eingesetzte Wasserglas enthält Komponenten, die eine aktive chemische Verbindung mit dem Oberflächenmaterial der zu verbindenden Bauteile eingehen und auf diese Weise für eine sehr gute Oberflächenanbindung und damit Verbindung der Bauteile sorgen. Entscheidend für diese gute Oberflächenanbindung ist das alkalische Milieu der wässrigen Wassergläser, das beispielsweise im Falle von Metallrohrregistern zu einer entsprechenden chemischen Aktivierung der metallischen Oberflächen führt. Dabei dringen die chemischen Komponenten des Bindemittels quasi diffusionsartig in die Oxidhäute der Metalle ein und setzen sich dort in der Oxidstruktur fest. Dabei nutzt die Erfindung die Erkenntnis, dass metallische Oberflächen stets Überzüge beziehungsweise Schichten aus verschiedenen Metalloxiden aufweisen. Gerade dies ist Grundlage für eine stabile und dauerhafte Ausbildung der Verbindung zwischen der erfindungsgemäßen Klebe- und Gießmasse und der metallischen Oberfläche. Weiterhin benetzen die als Bindemittel eingesetzten Wassergläser das Füllmaterial und binden dieses nach der Trocknung gleichfalls fest in den Massenverbund ein. Insgesamt kann so eine besonders haftstarke Verbindung geschaffen werden.

Weiterhin sieht die Erfindung vor, dass die wärmeleitenden Substanzen eine Wärmeleitfähigkeit zwischen 50 W/mK und 200 W/mK aufweisen. Besonders bevorzugt weisen die Substanzen dabei Aluminium und/oder Kupfer und/oder Stahl auf.

Durch das Füllmaterial der Klebe- und Gießmasse soll eine hohe Wärmetransportrate zwischen benachbarten Oberflächen hergestellt werden. Die Wärmetransportrate soll dabei auch insbesondere bei nur kleinen Temperaturdifferenzen zwischen benachbarten Oberflächen besonders hoch sein. Um eine solche zu erreichen, sind Materialien erforderlich, welche eine Wärmeleitfähigkeit zwischen 50 und 200 W/mK aufweisen. Dazu zählen Substanzen wie Aluminium, Kupfer oder auch Stahl. Durch die aus Füllmaterial und Bindemittel bestehende wärmeleitende Klebe- und Gießmasse kann somit sowohl eine hohe Wärmeleitfähigkeit als auch eine besonders hohe Haftwirkung erreicht werden.

Vorteilhaft ist dabei vorgesehen, dass die wärmeleitenden Substanzen als Fasern, Späne, Körner und/oder Pulver ausgebildet sind. Durch die Beibringung des Füllmaterials in einer solchen "Partikelform" kann eine besonders gute Mischbarkeit mit dem Bindemittel erreicht werden. Besonders vorteilhaft können die metallischen Stoffe dabei "Abfallstoffe" aus der spanenden Bearbeitung sein. Somit können die in Drehereien, Fräsereien und sonstigen metallverarbeitenden Betrieben anfallenden Metallspäne oder ähnliches weiterhin sinnvoll verarbeitet werden. Für eine gute Mischbarkeit mit dem Bindemittel ist es dabei vorteilhaft, wenn die Späne eine Stärke von ca. 0,1 mm bis ca. 0,5 mm und eine Länge von ca. 0,1 mm bis 30 mm aufweisen.

Erfindungsgemäß weisen die wärmeleitenden Substanzen eine oder mehrere nichtmetallische Substanzen aufweisen. Besonders bevorzugt kann die nichtmetallische Substanz Graphit sein. Dadurch kann die ausgezeichnete Wärmeleitfähigkeit auch von nichtmetallischen Substanzen genutzt werden. Entscheidend für die Erreichung einer guten Wärmeleitfähigkeit ist dabei stets die gute Kontaktierung zwischen der wärmeleitenden Klebe- und Gießmasse und der metallischen Oberfläche. Dabei ist stets die Partikelgröße der beigemengten metallischen oder auch nichtmetallischen Komponenten wesentlich. Am Beispiel von Graphit sind insbesondere Korngrößen von 5 µm bis 300 µm besonders vorteilhaft. In der Regel werden jedoch Mischungen aus unterschiedlichen Korngrößen, mit einem entsprechenden Korngrößenspektrum, eingesetzt. In Bezug auf die nichtmetallische Substanz Graphit sind sowohl Sorten aus umgeblähtem wie auch aus geblähtem Graphit denkbar.

Weiterhin kann das Füllmaterial ebenfalls Zellulosefasern aufweisen. Die Zellulosefasern dienen dabei zur Erhöhung der Festigkeit der wärmeleitenden Klebe- und Gießmasse. Zellulosefasern bestehen aus Mehrfachzuckermolekülen, deren Oberflächenstruktur so geartet ist, dass eine optimale Verbindung zwischen Zellulosefasern und wasserglashaltigem Bindemittel erreicht wird. Dies stellt eine besonders einfache Möglichkeit dar, die Festigkeitseigenschaften des Wärmeleitmaterials zu verbessern. Typische Zusatzmengen liegen dabei im Bereich von 0,5 bis 10 Massenprozent. Typische Faserlängen der zugesetzten Zellulosefasern liegen im Bereich von 20 µm bis 2000 µm.

Ebenfalls kann das Füllmaterial einen wasserlöslichen, kunststoffhaltigen Kleber aufweisen. Durch die sogenannten Dispersionskleber oder auch Styrolacrylate kann eine erhebliche Verbesserung der Duktilität der erfindungsgemäßen Klebe- und Gießmasse erreicht werden. Alternativ oder zusätzlich sind ebenfalls Zusätze von Glimmer, Talkum, Kaolin und/oder auch Porzellanmehl innerhalb des Füllmaterials denkbar. Besonders vorteilhaft wird Glimmer dabei in Mengen von ca. 10 Massenprozent zugesetzt, Talkum in einer Menge von 6 bis 7 Massenprozent und Kaolin beziehungsweise Porzellanmehl in einer Menge von 0,5 bis 10 Massenprozent.

Schließlich kann die erfindungsgemäße wärmeleitende Klebe- und Gießmasse ebenfalls ein Lösungsmittel aufweisen. Durch das Lösungsmittel erhält die Klebe- und Gießmasse eine Verarbeitungskonsistenz, die es ermöglicht, die zu fügenden Bauteile so zu verbinden, dass nur minimale Hohlräume, Fehlstellen oder Lunker entstehen. Nur so kann sichergestellt werden, dass im Hinblick auf den Wärmefluss zwischen den Oberflächen keine isolierenden Fehlstellen eingebaut werden, die eine Reduzierung des Wärmeflusses bei geringen Temperaturdifferenzen zur Folge hätten. Erreicht wird dies dadurch, dass die wärmeleitenden Füllmaterialien sowie das benötigte Bindemittel durch den Zusatz des geeigneten Lösungsmittels innerhalb eines Mischprozesses in einen pastösen, wenn gewünscht auch flüssigkeitsähnlichen, Zustand gebracht werden. Dies ermöglicht eine je nach Anwendungsfall technisch einfache Verarbeitung und optimale Verbindung der wärmeführenden Bauteile.

Neben der wärmeleitenden Klebe- und Gießmasse sieht die Erfindung weiterhin Wärmeleitplatten vor, welche eine erfindungsgemäße wärmeleitende Klebe- und Gießmasse aufweisen.

Weiterhin sieht die Erfindung ein Verfahren zur Herstellung einer Wärmeleitplatte gemäß Anspruch 9 vor.

Durch die Erfindung kann somit insgesamt eine wärmeleitende Klebe- und Gießmasse zur Verbindung von Bauteilen geschaffen werden, welche folgende Vorzüge gegenüber dem Stand der Technik aufweist:
- besonders hohe Haftkräfte durch chemische Verbindung zwischen dem Alkalisilikat und der Oberfläche der zu verbindenden Bauteile,
- Lunker, Poren usw. zwischen den zu verbindenden Oberflächen werden vermieden,
- giftige oder umweltschädliche Stoffe, wie beispielsweise beim Löten verwendet, entfallen völlig,
- die Investitionskosten sind sehr gering,
- Füllmaterial, Bindemittel und Lösungsmittel sind besonders leicht mischbar.

Ein Ausführungsbeispiel der Erfindung wird im Folgenden näher erläutert:

Zur Herstellung einer erfindungsgemäßen wärmeleitenden Klebe- und Gießmasse wird ein Füllmaterial aus wärmeleitenden Substanzen mit besonders hoher Wärmeleitfähigkeit verwendet. Vorteilhaft sind diese Substanzen Aluminium, Kupfer und/oder Stahl. Die Substanzen werden dabei in Form von Fasern, Spänen, Körnern und/oder als Pulver verwendet. Sie weisen eine Stärke von ca. 0,1 mm bis 0,5 mm und eine Länge von ca. 0,1 mm bis 30 mm auf.

Zusätzlich können die metallischen Substanzen weiterhin mit einer nichtmetallischen Substanz, beispielsweise Graphit, gemischt werden, so dass insgesamt eine hohe Wärmeleitfähigkeit zwischen 50 und 200 W/mK entsteht. Das Füllmaterial kann ebenfalls mit Zellulosefasern verfestigt werden. Typische Zusätze liegen dabei im Bereich von 0,5 bis 10 Massenprozent. Typische Faserlängen der zugesetzten Zellulosefasern sind im Bereich von 20 µm bis 2000 µm. Weiterhin kann das Füllmaterial ebenfalls einen wasserlöslichen, kunststoffhaltigen Kleber und/oder Materialien wie Glimmer, Talkum, Kaolin und/oder Porzellanmehl aufweisen.

Das Füllmaterial wird anschließend mit dem erfindungsgemäßen Bindemittel vermischt. Das Bindemittel wird dabei auf die zu verbindende Oberfläche abgestimmt. Im Falle von metallischen Oberflächen eignet sich beispielsweise ein Alkalisilikat wie Na₂SiO₃ oder K₂SiO₃. Im Falle von Kunststoffflächen kann das Bindemittel auch einen wasserlöslichen, kunststoffhaltigen Kleber, beispielsweise einen Dispersionskleber, aufweisen.

Anschließend wird dem Füllmaterial und dem Bindematerial vorzugsweise zusätzlich ein Lösungsmittel zugesetzt. Dadurch kann das Gemisch besonders leicht mittels eines Mischprozesses in einen pastösen oder auch flüssigkeitsähnlichen Zustand gebracht werden.

Zur Herstellung einer Wärmeleitplatte mit beispielsweise metallischen Rohrregistern wird die erfindungsgemäße wärmeleitende Klebe- und Gießmasse in eine Gießform gegeben und anschließend werden die Bauteile darin eingebettet, so dass die Klebe- und Gießmasse in Kontakt mit allen Oberflächenbereichen der Bauteile steht. Durch die innerhalb des Füllmaterials verwendeten Wassergläser kann eine aktive, chemische Verbindung zu den auf den metallischen Oberflächen der Bauteile vorhandenen Metalloxidschichten hergestellt werden. Durch das alkalische Milieu der wässrigen Wassergläser entsteht eine chemische Aktivierung der metallischen Oberflächen, wobei die chemischen Komponenten der Wassergläser diffusionsartig in die Oxidhäute der Metalle eindringen und sich dort in der Oxidstruktur einbetten. Dadurch wird der besonders starke Haftverbund zwischen der Klebe- und Gießmasse und der metallischen Oberfläche des Bauteils erreicht. Da das Füllmaterial der Klebe- und Gießmasse weiterhin metallische und auch nichtmetallische Substanzen mit hoher Wärmeleitfähigkeit aufweist, besitzt auch die Klebestelle eine besonders hohe Wärmeleitfähigkeit. Dadurch entsteht eine kontinuierliche, wärmeleitende Verbindung zwischen der wärmeleitenden Klebe- und Gießmasse und den eingebetteten Bauteilen, d. h. dem Rohrregister. Mittels des in der Masse weiterhin vorhandenen Lösungsmittels kann die erfindungsgemäße Masse so in die Übergansbereiche zwischen Gießmasse und Bauteilen eindringen, dass nur minimale Hohlräume, Fehlstellen oder Lunker entstehen. Dadurch wird sichergestellt, dass im Hinblick auf den Wärmefluss zwischen den Bauteilen keine isolierenden Fehlstellen eingebaut werden, die eine Reduzierung des Wärmeflusses, insbesondere bei geringen Temperaturdifferenzen, zur Folge hätten.

Dadurch, dass das innerhalb der wärmeleitenden Klebe- und Gießmasse enthaltene Bindemittel bei Berührung mit Luft erstarrt, härtet die Flüssigkeit und damit auch die Klebe- und Gießmasse zu einer harten Masse aus. Somit erstarrt die Klebestelle ganz ohne zusätzliche Maßnahmen.

Gemäß einer weiteren Ausführungsvariante ist es ebenfalls möglich, Wärmetauscher unabhängig von einer vorgegebenen Gießform herzustellen. Dabei wird nicht eine standardisierte Gießform mit Rohrregistern und Anschlüssen versehen, ausgegossen und anschließend der fertig gegossene Körper der Gießform entnommen, sondern es kann nach Belieben jeder vorhandene Hohlkörper ausgegossen werden und im ausgegossenen Zustand als Wärmetauscher dienen. Dadurch wird es beispielsweise möglich, Wandelelemente, Möbelteile etc. als Heizkörper zu verwenden, ohne dass diese in dieser Funktion als traditioneller Heizkörper zu erkennen sind. Damit werden insbesondere in Wohnräumen ästhetische Vorteile erzielt.

## Patentansprüche

1. Wärmeleitende Klebe- und Gießmasse zur Verbindung von metallischen Bauteilen
**gekennzeichnet durch**
ein Füllmaterial und ein Bindemittel zur Verbindung der Bauteile mit der Klebe- und Gießmasse, wobei das Füllmaterial eine oder mehrere wärmeleitende Substanzen aufweist, wobei die wärmeleitenden Substanzen eine oder mehrere nichtmetallische Substanzen aufweisen, wobei eine nichtmetallische Substanz Graphit ist und wobei das Bindemittel ein Alkalisilikat ist.

2. Wärmeleitende Klebe- und Gießmasse nach Anspruch 1, **dadurch gekennzeichnet, dass** das Alkalisilikat Na₂SiO₃ oder K₂SiO₃ ist.

3. Wärmeleitende Klebe- und Gießmasse nach einem der vorhergehenden Ansprüche, **dadurch gekennzeichnet, dass** die wärmeleitende Substanz eine Wärmeleitfähigkeit zwischen 50 W/mk und 200 W/mk aufweist.

4. Wärmeleitende Klebe- und Gießmasse nach einem der vorhergehenden Ansprüche, **dadurch gekennzeichnet, dass** die wärmeleitenden Substanzen Aluminium und/oder Kupfer und/oder Stahl aufweisen.

5. Wärmeleitende Klebe- und Gießmasse nach einem der vorhergehenden Ansprüche, **dadurch gekennzeichnet, dass** die wärmeleitenden Substanzen als Fasern, Späne, Körner und/oder Pulver ausgebildet sind.

6. Wärmeleitende Klebe- und Gießmasse nach einem der vorhergehenden Ansprüche, **dadurch gekennzeichnet, dass** das Füllmaterial Zellulosefasern aufweist.

7. Wärmeleitende Klebe- und Gießmasse nach einem der vorhergehenden Ansprüche, **dadurch gekennzeichnet, dass** das Füllmaterial einen wasserlöslichen, kunststoffhaltigen Kleber aufweist.

8. Wärmeleitende Klebe- und Gießmasse nach einem der vorhergehenden Ansprüche, **dadurch gekennzeichnet, dass** das Füllmaterial Glimmer, Talkum, Kaolin und/oder Porzellanmehl aufweist.

9. Verfahren zur Herstellung einer Wärmeleitplatte, wobei ein oder mehrere metallische Bauteile in eine fließfähige, wärmeleitende Klebe- und Gießmasse nach einem der vorhergehenden Ansprüche eingebettet werden und wobei die fließfähige wärmeleitende Klebe- und Gießmasse anschließend bei Kontakt mit Umgebungsluft aushärtet.

## Claims

1. A heat conducting adhesive and casting compound for connecting metallic components,
**characterized by**
a filling material and a binding agent for connecting the components with the adhesive and casting compound, wherein the filling material comprises one or more heat conducting substances, wherein the heat conducting substances comprise one or more non-metallic substances, wherein one non-metallic substance is graphite and wherein the binding agent is an alkali silicate.

2. A heat conducting adhesive and casting compound according to claim 1, **characterized in that** the alkali silicate is Na₂SiO₃ or K₂SiO₃.

3. A heat conducting adhesive and casting compound according to one of the preceding claims, **characterized in that** the heat conducting substance comprises a thermal conductivity comprised between 50 W/mk and 200 W/mk.

4. A heat conducting adhesive and casting compound according to one of the preceding claims, **characterized in that** the heat conducting substances comprise aluminum and/or copper and/or steel.

5. A heat conducting adhesive and casting compound according to one of the preceding claims, **characterized in that** the heat conducting substances are designed as fibres , chips, grains and/or powder.

6. A heat conducting adhesive and casting compound according to one of the preceding claims, **characterized in that** the filling material comprises cellulose fibres.

7. A heat conducting adhesive and casting compound according to one of the preceding claims, **characterized in that** the filling material comprises a water soluble adhesive containing plastic.

8. A heat conducting adhesive and casting compound according to one of the preceding claims, **characterized in that** the filling material comprises mica, talcum, kaolin and /or porcelain flour.

9. A method for manufacturing a heat conducting plate, wherein one or more metallic components will be embedded in a flowable, heat conducting adhesive and casting compound according to one of the preceding claims, and wherein the flowable, heat conducting adhesive and casting compound will afterwards harden in contact with ambient air.

## Revendications

1. Masse adhésive et coulée thermo-conductrice destinée à relier des composants métalliques,
**caractérisée par**
un matériau de remplissage et un agent liant pour relier les composants à la masse adhésive et coulée, le matériau de remplissage comprenant une ou plusieurs substances thermo-conductrices, les substances thermo-conductrices comprenant une ou plusieurs substances non métalliques, l'une substance non métallique étant du graphite et l'agent liant étant un silicate alcalin.

2. Masse adhésive et coulée thermo-conductrice selon la revendication 1, **caractérisée en ce que** le silicate alcalin est Na₂SiO₃ ou K₂SiO₃.

3. Masse adhésive et coulée thermo-conductrice selon l'une des revendications précédentes, **caractérisée en ce que** la substance thermo-conductrice comprend une conductivité thermique comprise entre 50 W/mk et 200 W/mk.

4. Masse adhésive et coulée thermo-conductrice selon l'une des revendications précédentes, **caractérisée en ce que** les substances thermo-conductrices comprennent de l'aluminium et/ou du cuivre et/ou de l'acier.

5. Masse adhésive et coulée thermo-conductrice selon l'une des revendications précédentes, **caractérisée en ce que** les substances thermo-conductrices sont conçues comme des fibres, des copeaux, des grains et/ou du poudre.

6. Masse adhésive et coulée thermo-conductrice selon l'une des revendications précédentes, **caractérisée en ce que** le matériau de remplissage comprend des fibres de cellulose.

7. Masse adhésive et coulée thermo-conductrice selon l'une des revendications précédentes, **caractérisée en ce que** le matériau de remplissage comprend un adhésif soluble dans l'eau et contenant une matière plastique.

8. Masse adhésive et coulée thermo-conductrice selon l'une des revendications précédentes, **caractérisée en ce que** le matériau de remplissage comprend du mica, du talc, du kaolin et/ou de la poudre de porcelaine.

9. Procédé de fabrication d'une plaque conductrice de la chaleur, dans lequel un ou plusieurs composants métalliques sont incorporés dans une masse adhésive et coulée thermo-conductrice et fluide selon l'une des revendications précédentes, et dans lequel la masse adhésive et coulée thermo-conductrice et fluide durcit ensuite au contact avec de l'air ambiant.
